# EUROPÄISCHE PATENTSCHRIFT

(11) **EP 3 730 755 B1**
(45) Veröffentlichungstag und Bekanntmachung des Hinweises auf die Patenterteilung: **09.08.2023**
(21) Anmeldenummer: 20166355.6
(22) Anmeldetag: 27.03.2020
(51) Int. Cl.: F01N 9/00

(54) **VERFAHREN UND VORRICHTUNG ZUR DREHZAHLBESTIMMUNG EINER PUMPE**
METHOD AND DEVICE FOR DETERMINING THE SPEED OF A PUMP
PROCÉDÉ ET DISPOSITIF DE DÉTERMINATION DE LA VITESSE DE ROTATION D'UNE POMPE

(30) Priorität: 24.04.2019 DE 102019110569
(43) Veröffentlichungstag der Anmeldung: 28.10.2020
(73) Patentinhaber: MAN Truck & Bus SE, 80995 München (DE)
(72) Erfinder: Grünbeck, Thomas, 80995 München (DE)
(74) Vertreter: v. Bezold & Partner Patentanwälte - PartG mbB

(56) Entgegenhaltungen:
- WO-A1-2014/134273
- CN-A- 107 725 347
- DE-A1- 10 244 203
- DE-A1-102007 034 113
- DE-A1-102011 078 870

## Beschreibung

Die Erfindung betrifft ein Verfahren zur Drehzahlbestimmung einer Pumpe. Ferner betrifft die Erfindung eine Vorrichtung, die ausgelegt ist, das betreffende Verfahren durchzuführen, sowie ein Kraftfahrzeug mit einer entsprechenden Vorrichtung.

Zur Verringerung von NOx-Emissionen von Brennkraftmaschinen, insbesondere von DieselBrennkraftmaschinen, werden heutzutage oftmals SCR-Katalysatoren zur Abgasnachbehandlung eingesetzt. Mittels derartiger Systeme werden die im Abgas enthaltenen Stickoxide mit dem Reduktionsmittel Ammoniak zu Stickstoff reduziert, wozu dem Abgasstrom Ammoniak bzw. eine ammoniakabspaltende Substanz (z. B. wässrige Harnstofflösung) über geeignete Dosiervorrichtungen zugegeben wird.

In der Regel wird dabei das in einem Vorratstank gelagerte Reduktionsmittel über eine Pumpe zu einem oder mehreren Dosierventilen gefördert und zudem auf einen vorgegebenen Dosierdruck gebracht. Dieser kann dabei beispielsweise in Abhängigkeit einer Betriebsgröße der Brennkraftmaschine (z. B. die aktuelle Drehzahl) und/oder einer Kenngröße des Abgases (z. B. die aktuelle Abgastemperatur) festgelegt sein. Um dabei auch Druckschwankungen im System (z. B. aufgrund der Betätigung der Dosierventile) auszugleichen, d. h. um durchgehend einen möglichst gleichbleibenden Dosierdruck zu gewährleisten, ist meist eine Regelung der Pumpendrehzahl vorgesehen. Dementsprechend ist in diesem Zusammenhang eine präzise Kenntnis bzw. Bestimmung der aktuellen Drehzahl der Pumpe erforderlich.

Die im Stand der Technik bekannten Ansätze zur Drehzahlbestimmung bzw. der Drehzahlregelung derartiger Pumpen basieren meist auf einer rechenintensiven und damit aufwendig umzusetzenden Fourier-Analyse des Reduktionsmittel-Drucksignals im Dosiersystem. Beispielhaft sei in diesem Zusammenhang auf die DE 10 2011 078 870 A1 verwiesen, welche ein Verfahren zur Überwachung von Funktionen eines Dosiersystems betrifft, bei dem ein flüssiges Medium mittels einer Förderpumpe und wenigstens eines Dosierventils getaktet dosiert wird und wobei der Druck im Dosiersystem erfasst wird. Hierbei wird der über die Zeit erfassbare Druck spektral ausgewertet und insbesondere einer Frequenzanalyse unterworfen und mit den Daten der Auswertung die Fehlerfreiheit der Funktionen des Dosiersystems und/oder die Geschwindigkeit des Motors der Förderpumpe überwacht.

Ferner offenbart die WO 2014/134273 A1 ein System zur Diagnose und/oder Bestimmung der Leistung eines Reduktionsmittelabgabesystems. Hierbei wird zunächst eine reduzierte Reduktionsmittel-Durchflussrate ermittelt und anschließen ein Reduktionsmittel-Durchflussratenfehler zumindest teilweise auf der Grundlage einer Differenz zwischen einem erwarteten Reduktionsmittel-Durchflussratenwert und der zuvor ermittelten reduzierten Reduktionsmittel-Durchflussrate bestimmt. Weiterhin kann ein Leistungsstatuswert, der einen Leistungsstatus des Reduktionsmitteldosiersystems anzeigt, zumindest teilweise auf der Grundlage des ermittelten ersten Reduktionsmittel-Durchflussratenfehlers und eines vorbestimmten Schwellenwerts ausgegeben werden.

Aus der CN 107 725 347 A ist eine Vorrichtung und ein Verfahren zur Erfassung der Drehzahl einer Hydraulikpumpe bekannt. Die Vorrichtung zur Erfassung der Drehzahl der Hydraulikpumpe wird an einer Entwässerungseinrichtung eingesetzt. Die Entwässerungsvorrichtung umfasst ein hydraulisches System, wobei das hydraulische System die Hydraulikpumpe und eine hydraulische Rohrleitung umfasst. Das hydraulische System umfasst ferner einen hydraulischen Sensor zum Erfassen des hydraulischen Drucks des Hydrauliköls in dem hydraulischen System sowie eine Steuerung zum Berechnen der Drehgeschwindigkeit der Hydraulikpumpe entsprechend der hydraulischen Änderung des Hydrauliköls, die durch den hydraulischen Sensor erfasst wird. Die Drehgeschwindigkeit der Hydraulikpumpe wird durch Erfassen von Hydraulikimpulsen im Hydrauliksystem der Entwässerungsvorrichtung erfasst, so dass die Drehgeschwindigkeit der Hydraulikpumpe genau erfasst werden kann.

Aus der DE 10 2007 034 113 A1 ist ein Verfahren zum Ermitteln der Drehzahl eines elektrischen Motors bekannt, der Bestandteil eines Motorpumpenaggregats in einer Druckregelvorrichtung ist, wobei die Drehzahl des Motors und damit die Förderleistung der Pumpe mit der elektrischen Ansteuerleistung des Motors im Zusammenhang steht und die Drehzahl der Pumpe mittels einer Steuerung durch Änderung der Ansteuerleistung eingestellt wird und der Motor keine Mittel zur Bestimmung der Drehzahl umfasst. Das Ermitteln der Drehzahl erfolgt an Hand von Druckpulsationen des Förderfluids und die Druckpulsationen an einem Drucksensor des Druckregelaggregats gemessen werden.

Ferner offenbart die DE 102 44 203 A1 ein Verfahren zur Erfassung der Drehzahl eines Pumpenmotors eines hydraulischen Pumpensystems, wobei eine durch den Pumpenmotor angetriebene Pumpe Hydraulikflüssigkeit in einen Pumpenspeicher fördert. Das Verfahren umfasst dabei die Schritte: Erfassung eines die Fördertätigkeit der Pumpe darstellenden Drucksignals, Feststellung von Druckspitzen innerhalb dieses Drucksignals und Festlegung der Drehzahl des Pumpenmotors auf der Grundlage der Frequenz bzw. der zeitlichen Abstände dieser Druckspitzen.

Entsprechend besteht ein Bedarf an einem einfacher, d. h. mit weniger Rechenoperationen, und damit kostengünstiger zu realisierenden Verfahren zur Drehzahlbestimmung bzw. Drehzahlüberwachung.

Diese Aufgaben werden durch ein Verfahren, eine Vorrichtung sowie ein Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Verfahren zur Drehzahlbestimmung einer Pumpe bereitgestellt, wobei vorzugsweise mittels der Pumpe ein Fluiddruck eines Fluids auf einen Soll-Fluiddruck pₛₒₗₗ geregelt wird. Bevorzugt handelt es sich bei dem Fluid um ein Reduktionsmittel zur Abgasnachbehandlung, jedoch eignet sich das erfindungsgemäße Verfahren allgemein für jegliche Fluide, d. h. Gase, Flüssigkeiten, Gas-Flüssigkeits-Gemische und/oder Flüssigkeiten mit geringem Feststoffanteil. Entsprechend kann das Verfahren somit auch z. B. im Zusammenhang mit einer Öl-, Kraftstoff- oder Kühlwasserpumpe Anwendung finden.

Grundsätzlich umfasst das Verfahren dabei den Schritt des Bereitstellens eines Drucksignals in einem vorbestimmten, d. h. zuvor festgelegten, Zeitintervall, wobei das Drucksignal einen, vorzugsweise pumpenausgangsseitigen, Fluiddruck des Fluids angibt oder eine Größe ist, aus der der, vorzugsweise pumpenausgangsseitige, Fluiddruck des Fluids ableitbar ist. Das Bereitstellen des Drucksignals kann dabei ein, vorzugsweise quasi-simultanes, Erfassen des Drucksignals umfassen. Zudem oder alternativ kann das Bereitstellen auch ein Empfangen des Drucksignals mittels einer entsprechenden Empfangseinrichtung und/oder ein Auslesen des Drucksignals aus einem Speicher umfassen. Ferner kann das Drucksignal sowohl ein analoges oder digitales Drucksignal sein und/oder eine Mehrzahl aufeinanderfolgender Signalwerte umfassen.

Ferner umfasst das Verfahren den Schritt des Bestimmens der Drehzahl aus zeitlichen Schwankungen des Drucksignals in dem vorbestimmten Zeitintervall. Vorzugsweise handelt es sind bei den zeitlichen Schwankungen hierbei um Schwankungen des Drucksignals, die durch die Pumpenbewegung und/oder den Pumpenbetrieb verursacht werden (z. B. Drucksignaloszillationen). Da hierbei die Drehzahlbestimmung aus dem bereitgestellten Signal unmittelbar im Zeitbereich erfolgen kann, kann somit auf vorteilhafte Weise auf eine rechenintensive Signalanalyse im Frequenzbereich verzichtet werden. In diesem Zusammenhang soll als "Drehzahl" eine Größe verstanden werden, die die Anzahl der Pumpenumdrehungen in einer bestimmten Zeit angibt, wobei der Begriff allgemein sowohl für Drehbewegungen (z. B. im Fall einer Drehschieberpumpe), als auch sonstige periodischen Vorgänge (z. B. im Fall Membranpumpe oder Hubkolbenpumpe) verstanden werden soll. Mit anderen Worten kann der Begriff Drehzahl auch eine Frequenz bezeichnen.

Erfindungsgemäß kann das Bestimmen der Drehzahl ein Ermitteln einer Anzahl an steigenden und/oder fallenden Abschnitten des Drucksignals im vorbestimmten Zeitintervall umfassen. Allgemein können die steigenden und/oder fallenden Abschnitte auch als steigende und/oder fallende Flanken bezeichnet werden. Aus der Anzahl ΔN der steigenden bzw. fallenden Abschnitte innerhalb des vorbestimmten Zeitintervalls Δt kann so z. B. durch einfache Quotientenbildung (ΔN/Δt) und ggf. Umrechnung der Einheitenangabe auf eine wenig rechenaufwendige Weise die Drehzahl der Pumpe bestimmt werden.

Erfindungsgemäß kann das Bestimmen der Drehzahl auch ein Ermitteln zumindest einer Zeitdauer einer steigenden Flanke des Drucksignals und/oder ein Ermitteln zumindest einer Zeitdauer einer fallenden Flanke des Drucksignals im vorbestimmten Zeitintervall umfassen. Mit anderen Worten kann z. B. eine Zeitdauer eines kontinuierlich steigenden Abschnitts des Drucksignals zwischen einem lokalen Minimum und einem lokalen Maximum und/oder eines kontinuierlich fallenden Abschnitts des Drucksignals zwischen einem lokalen Maximum und einem lokalen Minimum ermittelt werden. Da die so ermittelte Zeitdauer ΔT - im einfachsten Fall - gerade der halben Periodendauer der, vorzugsweise periodischen, Pumpenbewegung widergeben kann, kann durch entsprechende Kehrwertbildung (2ΔT)⁻¹ und ggf. Umrechnung der Einheitenangabe die Drehzahl der Pumpe bestimmt werden. Auf vorteilhafte Weise wird auch hier eine rechen- und signaltechnisch einfach zu realisierende Möglichkeit zur Drehzahlbestimmung bereitgestellt.

Um in diesem Zusammenhang die Genauigkeit der Drehzahlbestimmung weiter zu verbessern können dabei auch die Zeitdauern mehrerer steigender Flanken und/oder mehrerer fallender Flanken des Drucksignals ermittelt werden. Entsprechend kann dann das Bestimmen der Drehzahl auf Basis einer mittleren Zeitdauer der steigenden und/oder fallenden Flanken erfolgen, wobei die mittlere Zeitdauer z. B. das arithmetische Mittel der mehreren steigenden und/oder fallendenden Flanken sein kann. Anders ausgedrückt kann die Drehzahlbestimmung auf Basis der mittleren Periodendauer erfolgen. Alternativ kann zur Bestimmung der mittleren Zeitdauer der steigenden und/oder fallenden Flanken bzw. der mittleren Periodendauer auch eine andere dem Fachmann bekannte Rechenvorschrift, darunter z. B. das geometrische oder quadratische Mittel, verwendet werden.

Gemäß einem weiteren Aspekt der Erfindung können die steigenden Flanken des Drucksignals jeweils kontinuierlich steigende Abschnitte des Drucksignals zwischen einem lokalen Minimum und einem lokalen Maximum sein. Zudem oder alternativ können die fallenden Flanken des Drucksignals jeweils kontinuierlich fallende Abschnitte des Drucksignals zwischen einem lokalen Maximum und einem lokalen Minimum sein. Mit anderen Worten können als steigende bzw. fallende Flanken ununterbrochen steigende bzw. fallende Bereiche des Drucksignals verstanden werden. Vorzugsweise handelt es sich bei den vorgenannten Signalabschnitten dabei um Bereiche von Schwankungen des Drucksignals, die durch die Pumpenbewegung bzw. den Pumpenbetrieb verursacht werden. Auf vorteilhafte Weise wird dadurch ein zuverlässiges Erkennen der pumpeninduzierten Druckschwankungen ermöglicht.

Erfindungsgemäß erfolgt das Bestimmen der Drehzahl nicht auf Basis einer Fourier-Transformation des Drucksignals. Zudem kann das Bestimmen der Drehzahl im Zeitbereich des Drucksignals erfolgen. Mit andern Worten kann die die Analyse des Drucksignals in Abhängigkeit von der Zeit erfolgen. Auf vorteilhafte Weise ermögliche diese Merkmale eine einfache und schnelle Drehzahlbestimmung mit wenigen bzw. einfachen Rechenoperationen.

Gemäß einem weiteren Aspekt der Erfindung kann das bereitgestellte Drucksignal ein Drucksignal während einer Betriebsphase der Pumpe sein, in der eine Pumpengeschwindigkeit zwischen 10-30%, vorzugsweise zwischen 15-25%, besonders bevorzugt zwischen 18-22%, der maximalen Pumpengeschwindigkeit vorliegt. Bei der maximalen Pumpengeschwindigkeit soll es sich dabei um eine maximal mögliche und/oder maximal zulässige Pumpengeschwindigkeit handeln. Mit anderen Worten kann das bereitgestellte Drucksignal ein Drucksignal sein, das dann erfasst wird, während die Pumpe mit einer relativen Pumpengeschwindigkeit von z. B. 20% (bezogen auf die maximale Pumpengeschwindigkeit) betrieben wird. Erfinderseitig wurde in diesem Zusammenhang festgestellt, dass sich gerade dieser Betriebsberiech für eine zuverlässige Drehzahlbestimmung eignet. Ferner kann das Verfahren dabei auch den Schritt des Überwachens, ob das das bereitgestellte Drucksignal während einer Betriebsphase der Pumpe erfasst wurde, in der eine Pumpengeschwindigkeit zwischen 10-30%, vorzugsweise zwischen 15-25%, besonders bevorzugt zwischen 18-22%, der maximalen Pumpengeschwindigkeit vorlag. Falls ja, soll dann das vorgenannte Bestimmen der Drehzahl aus zeitlichen Schwankungen des Drucksignals im vorbestimmten Zeitintervall erfolgen. Falls nein, soll dieses Drucksignal nicht weiter für die Drehzahlbestimmung verwendet werden.

Nach einem weiteren Aspekt der Erfindung kann das bereitgestellte Drucksignal ein Drucksignal während einer Betriebsphase der Pumpe sein, in der der Fluiddruck nicht mehr als 5%, vorzugsweise nicht mehr 2%, besonders bevorzugt nicht mehr als 1%, vom Soll-Fluiddruck pₛₒₗₗ abweicht. Mit anderen Worten kann das bereitgestellte Drucksignal ein Drucksignal sein, das - abgesehen von den Einflüssen durch die Pumpe auf den Fluiddruck - möglichst frei von sonstigen Störeinflüssen (z. B. ein Druckabfall aufgrund der Entnahme größerer Mengen des Fluids etc.) ist. Vorzugsweise handelt es sich bei dem bereitgestellten Drucksignal somit um ein Drucksignal, das im vorbestimmten Zeitintervall möglichst unter unveränderten Systembedingungen (Pumpengeschwindigkeit, Fluidmenge etc.) erfasst wurde. Auf vorteilhafte Weise wird dadurch ein zuverlässiges Bestimmen der Pumpendrehzahl ermöglicht. Auch hier kann das Verfahren wiederum ein Überwachen umfassen, ob das bereitgestellte Drucksignal während einer Betriebsphase der Pumpe erfasst wurde, in der der Fluiddruck nicht mehr als 5%, vorzugsweise nicht mehr 2%, besonders bevorzugt nicht mehr als 1%, vom Soll-Fluiddruck pₛₒₗₗ abweicht. Falls ja, soll auch hier dann das vorgenannte Bestimmen der Drehzahl aus zeitlichen Schwankungen des Drucksignals im vorbestimmten Zeitintervall erfolgen. Falls nein, soll dieses Drucksignal nicht weiter für die Drehzahlbestimmung verwendet werden.

Gemäß einem weiteren Aspekt der Erfindung kann das auf einen Soll-Fluiddruck pₛₒₗₗ geregelte Fluid mittels einer Dosiereinrichtung dosierbar sein. Mit anderen Worten kann das auf einen Soll-Fluiddruck pₛₒₗₗ geregelte Fluid mit einer Dosiereinrichtung, z. B. in Form eines Dosierventils, in Fluidverbindung stehen. Weiterhin kann das bereitgestellte Drucksignal ein Drucksignal während einer Betriebsphase der Dosiereinrichtung sein, in der keine Dosierung erfolgt. Auf vorteilhafte Weise können dadurch Einflüsse des Dosiersystems auf das Drucksignal (z. B. Druckeinbrüche beim Öffnen und/oder Prelleffekte beim Schließen des Dosierventils) vermieden werden, die eine Analyse des Drucksignals zu Drehzahlbestimmung verfälschen könnten. Dabei kann das Verfahren wiederum ein Überwachen umfassen, ob das bereitgestellte Drucksignal während einer Betriebsphase der Dosiereinrichtung, in der keine Dosierung erfolgt, erfasst wurde. Falls ja, soll dann das Bestimmen der Drehzahl aus zeitlichen Schwankungen des Drucksignals im vorbestimmten Zeitintervall erfolgen. Falls nein, soll dieses Drucksignal nicht weiter für die Drehzahlbestimmung verwendet werden.

Nach einem weiteren Aspekt der Erfindung kann das bereitgestellte Drucksignal ein Drucksignal während einer Leerlaufphase und/oder Teillastphase der Pumpe sein. Die Leerlaufphase soll dabei im Wesentlichen eine Nulllastphase der Pumpe bezeichnen, z. B. eine Betriebsphase, in der gerade keine Dosierung erfolgt. Auch mittels dieses Merkmales wird auf vorteilhafte Weise eine möglichst zuverlässige und störungsfreie Drehzahlbestimmung ermöglicht. Auch hier kann das Verfahren ein Überwachen umfassen, ob das bereitgestellte Drucksignal während einer Leerlaufphase und/oder Teillastphase der Pumpe erfasst wurde. Falls ja, soll dann das Bestimmen der Drehzahl aus zeitlichen Schwankungen des Drucksignals im vorbestimmten Zeitintervall erfolgen. Falls nein, soll dieses Drucksignal nicht weiter für die Drehzahlbestimmung verwendet werden.

Um auch über einen längeren Zeitraum eine effiziente Drehzahlbestimmung zu ermöglichen kann gemäß einem weiteren Aspekt der Erfindung das Verfahren einen getakteten Betrieb umfassen, in dem das vorgenannte Verfahren in regelmäßigen Zeitabständen ausgeführt wird. Vorzugsweise entsprechen die regelmäßigen Zeitabstände dabei jeweils dem vorbestimmten Zeitintervall. Hierbei kann das vorbestimmte Zeitintervall 3 Sekunden, vorzugsweise 1 Sekunde, besonders bevorzugt 0,5 Sekunden sein. Zudem oder alternativ können auch die regelmäßigen Zeitabstände jeweils 3 Sekunden, vorzugsweise 1 Sekunde, besonders bevorzugt 0,5 Sekunden sein. Weiterhin kann der getaktete Betrieb auch das, vorzugsweise regelmäßige, Ausgeben eines zeitlichen Drehzahlmittelwerts umfassen, wobei in den Drehzahlmittelwert mehrere ermittelte Drehzahlwerte innerhalb des vorbestimmten Zeitintervalls und/oder innerhalb eines Zeitabstands eingehen. Auf vorteilhafte Weise wird dadurch eine robuste, d. h. wenig störungsanfällige, Drehzahlbestimmung ermöglicht.

Weiterhin wird erfindungsgemäß eine Vorrichtung zur Drehzahlbestimmung, vorzugsweise zur Drehzahlbestimmung einer Pumpe, bereitgestellt. Die Vorrichtung ist dabei ausgelegt, ein Verfahren, wie in diesem Dokument beschrieben, durchzuführen. Hierzu umfasst die Vorrichtung einen Prozessor sowie einen Speicher. Der Speicher enthält hierzu Anweisungen, die durch den Prozessor ausführbar sind, wodurch die Vorrichtung insgesamt in der Lage ist, ein zuvor beschriebenes Verfahren durchzuführen. Beispielsweise kann es sich bei der Vorrichtung zur Drehzahlbestimmung um ein Steuergerät eines Kraftfahrzeugs handeln. Alternativ kann es sich bei der Vorrichtung zur Drehzahlbestimmung jedoch auch um eine fahrzeugexterne Recheneinrichtung handeln. Da in diesem Zusammenhang die Drehzahlbestimmung wiederum unmittelbar im Zeitbereich erfolgt, wird auf vorteilhafte Weise eine einfach zu realisierende und damit kostengünstige Möglichkeit zur Drehzahlbestimmung bereitgestellt.

Um auf vorteilhafte Weise das zur Drehzahlbestimmung benötigte Drucksignal sogleich zu detektieren, kann die Vorrichtung hierbei ferner auch eine Sensoreinrichtung umfassen, die ausgebildet ist, das Drucksignal zu erfassen und bereitzustellen. Vorzugsweise kann die Sensoreinrichtung hierbei ausgebildet sein, einen auf einen Soll-Fluiddruck pₛₒₗₗ geregelten Fluiddruck eines Fluids (z. B. eines Reduktionsmittels zur Abgasnachbehandlung) zu erfassen und bereitzustellen. Beispielsweise kann die Sensoreinrichtung in diesem Zusammenhang ein piezoresistiver, piezoelektrischer, kapazitiver und/oder induktiver Drucksensor sein.

Ferner wird erfindungsgemäß auch ein Kraftfahrzeug bereitgestellt. Dieses umfassend eine Pumpe (z. B. eine Zahnradpumpe), mittels der vorzugsweise ein Fluiddruck eines Fluids auf einen Soll-Fluiddruck pₛₒₗₗ geregelt werden kann. Bevorzugt handelt es sich bei dem Fluid dabei um ein Reduktionsmittels zur Abgasnachbehandlung, wobei auch andere Fluide, darunter z. B. Öl, Kraftstoff und/oder Kühlwasser, verwendet werden können, ohne den Bereich der Erfindung zu verlassen. Weiterhin umfasst das Kraftfahrzeug eine Vorrichtung zur Drehzahlbestimmung der Pumpe, wie in diesem Dokument beschrieben.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: Eine schematische Darstellung eines Systems zur Abgasnachbehandlung eines Kraftfahrzeugs, umfassend eine Vorrichtung zur Drehzahlbestimmung einer Pumpe gemäß einer Ausführungsform der Erfindung;
- Figur 2:: Exemplarische Messwerte eines Drucksignals als Funktion der Zeit, das zur erfindungsgemäßen Drehzahlbestimmung genutzt werden kann;
- Figur 3:: Ein Flussdiagramm zur Illustration eines Verfahrens zur Drehzahlbestimmung einer Pumpe gemäß einer Ausführungsform der Erfindung; und
- Figur 4:: Eine schematische Darstellung eines Kraftfahrzeugs mit einer Vorrichtung zur Drehzahlbestimmung einer Pumpe gemäß Ausführungsform der Erfindung.

Gleiche oder funktional äquivalente Elemente sind dabei in allen Figuren mit denselben Bezugszeichen bezeichnet und zum Teil nicht gesondert beschrieben.

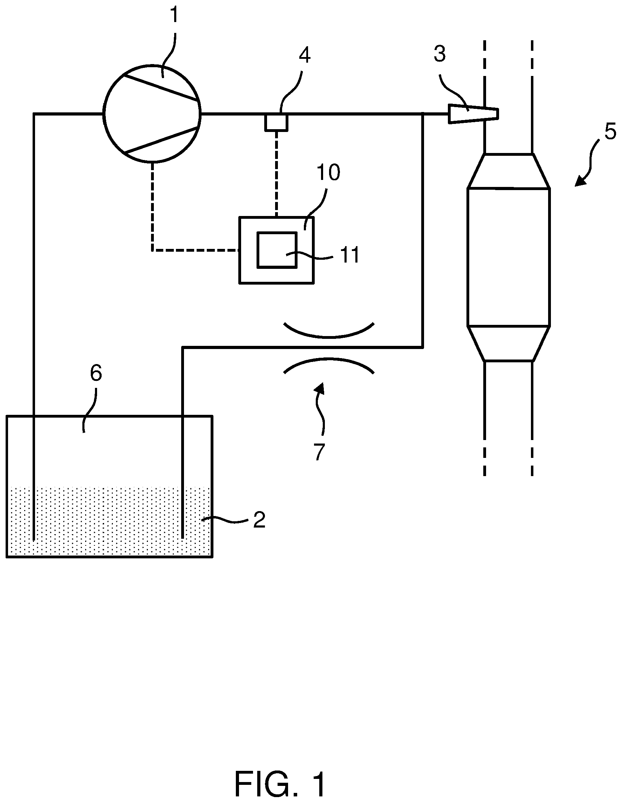

Figur 1 zeigt eine schematische Darstellung eines Systems zur Abgasnachbehandlung eines Kraftfahrzeugs 20, umfassend eine Vorrichtung 10 zur Drehzahlbestimmung einer Pumpe 1 gemäß einer Ausführungsform der Erfindung. Grundsätzlich weist das System zur Abgasnachbehandlung dabei einen Tank 6 zur Lagerung und/oder Bereitstellung eines, vorzugsweise flüssigen, Reduktionsmittels (z. B. wässrige Harnstofflösung) auf. Aus diesem Tank 6 kann mittels der Pumpe 1, die über entsprechende Förderleitungen mit dem Tank 6 in Fluidverbindung steht, Reduktionsmittel entnommen werden und (ebenfalls über entsprechende Förderleitungen) zu einer Dosiereinrichtung 3 in Form eines Dosierventils gefördert werden. Mit anderen Worten kann die Pumpe 1 eingangsseitig mit dem Tank 6 und ausgangsseitig mit der Dosiereinrichtung 3 in Fluidverbindung stehen.

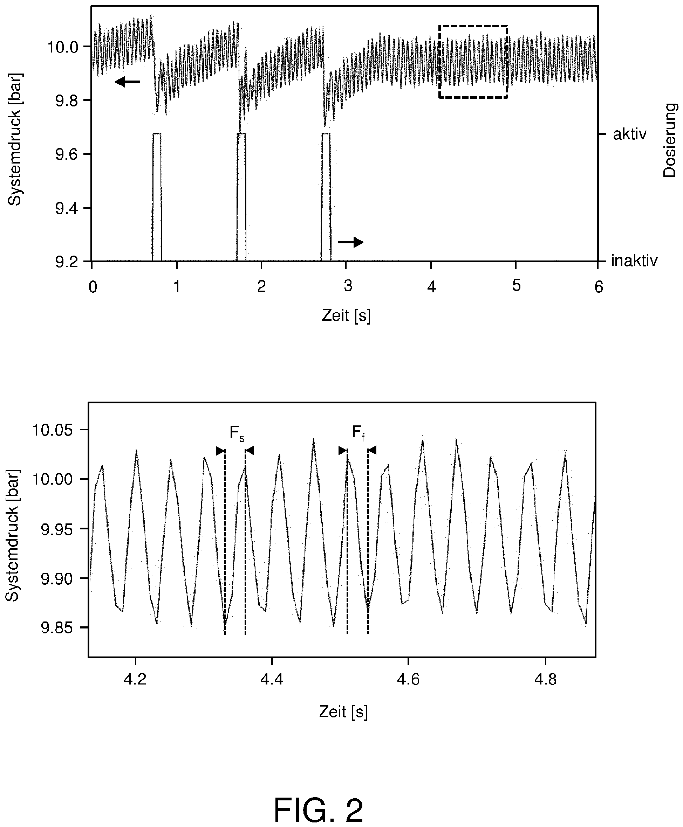

Mittels der Dosiereinrichtung 3 kann das Reduktionsmittel sodann in den im Abgastrakt 5 geführten Abgasstrom eingeleitet bzw. eingesprüht werden. Dabei ist zur Regulierung der Dosierparameter (Menge, Sprühstrahlform etc.) neben der Ausgestaltung der Dosiereinrichtung 3 selbst vor allem auch der an der Dosiereinrichtung 3 anliegende Reduktionsmittedruck entscheidend. Eine Regulierung dieses Reduktionsmitteldruckes auf einen vorbestimmten SollDruck pₛₒₗₗ kann dabei z. B. über eine entsprechende Steuerung bzw. Regelung der Pumpendrehzahl erfolgen. Hierzu kann das System zur Abgasnachbehandlung eine Steuereinrichtung 11 umfassen, die vorzugsweise zusammen mit der Vorrichtung 10 zur Drehzahlbestimmung als eine bauliche Einheit ausgeführt ist. Dieser Steuereinrichtung 11 kann hierbei ein Drucksignal (vgl. Figur 2) bereitgestellt werden, wobei das Drucksignal ein aktueller Fluiddruck des Reduktionsmittels sein kann und/oder eine Größe sein kann, aus der der aktuelle Fluiddruck des Reduktionsmittels ableitbar ist.

Zum Bereitstellen des entsprechenden Drucksignals umfasst das in Figur 1 dargestellte System zur Abgasnachbehandlung eine ausgangsseitig der Pumpe 1 angeordnete Sensoreinrichtung 4, die ausgebildet ist, das entsprechende Drucksignal zu erfassen und bereitzustellen. Auf Grundlage dieses Drucksignals sowie mittels - an sich im Stand der Technik bekannter - Regelungsverfahren kann die Steuereinrichtung 11 sodann zur Ausgabe entsprechende Steuersignale an die Pumpe 1 ausgebildet sein, um dadurch die Pumpendrehzahl und damit den ausgangsseitigen Reduktionsmitteldruck zu regulieren. Zusätzlich kann eine Regulierung des Reduktionsmitteldruckes auch über eine optionale - vorliegend dargestellte - Rückleitung zum Tank 6 mit einer dort angeordneten Drossel 7 erfolgen.

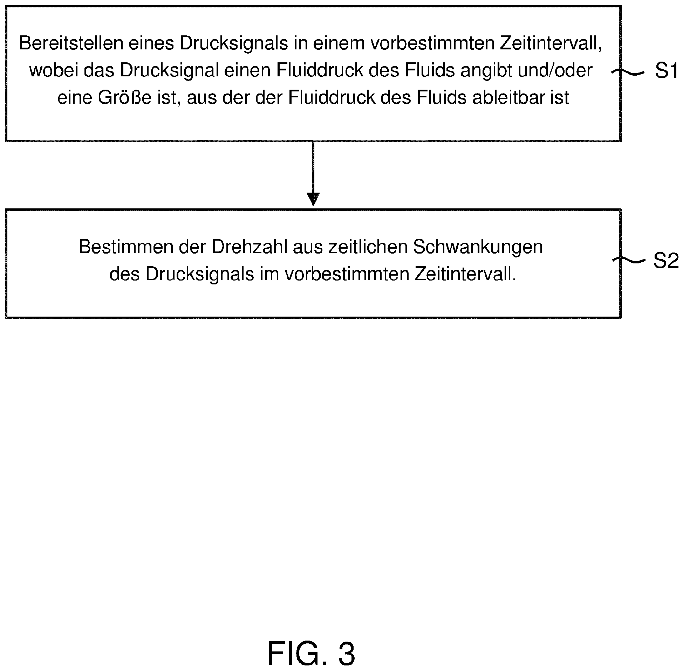

Neben der Steuerung der Pumpendrehzahl zur Regulierung des Reduktionsmitteldruckes wird das von der Sensoreinrichtung 4 erfasste und bereitzustelle Drucksignal (vgl. Figur 2) ferner auch zur Drehzahlbestimmung der Pumpe 1 verwendet. Hierzu weist das System zur Abgasnachbehandlung eine entsprechende erfindungsgemäße Vorrichtung 10 zur Drehzahlbestimmung auf. Diese Vorrichtung 10, welche beispielsweise als Teil eines Steuergeräts des Kraftfahrzeugs 20 ausgebildet sein kann, ist dabei ausgelegt, ein nachfolgend - unter Bezugnahme auf Figur 3 - noch genauer beschriebenes Verfahren durchzuführen. Die Vorrichtung 10 kann hierbei z. B. einen programtechnisch eingerichteten Mikroprozessor sowie einen entsprechenden Speicher umfassen. Vorzugsweise enthält der Speicher dabei Anweisungen, die durch den Prozessor ausführbar sind, wodurch die Vorrichtung 10 insgesamt in der Lage ist, das erfindungsgemäße Verfahren durchzuführen.

Bevor im Anschluss das Verfahren zur Drehzahlbestimmung eingehender beschrieben werden soll, soll zunächst kurz auf das dem Verfahren zugrundeliegende Drucksignal eingegangen werden. Figur 2 zeigt hierzu exemplarische Drucksignalmesswerte als Funktion der Zeit, welche zur erfindungsgemäßen Drehzahlbestimmung genutzt werden könnten. Beispielsweise kann das gezeigte Drucksignal mittels der in Figur 1 dargestellten Sensoreinrichtung 4 erfasst und bereitgestellt worden sein. Im oberen Diagramm ist hierbei der zeitliche Verlauf des pumpenausgangsseitigen Fluiddrucks eines Fluids 2 während drei kurzer Dosiervorgänge (vgl. logisches Dosierungssignal) dargestellt, wobei der Fluiddruck mittels einer Variation der Pumpendrehzahl auf einen Soll-Fluiddruck pₛₒₗₗ von nahezu 10 bar geregelt ist. Neben der kurzzeitigen Druckeinbrüche von etwa 0.2 bar während die Dosierung aktiv ist, sind in Figur 2 ebenfalls die durch die periodische Pumpenbewegung verursachten Oszillationen des Drucksignals zu erkennen.

Zur besseren Darstellung sind diese pumpenbedingten Druckschwankungen im unteren Diagramm für den im oberen Diagramm markierten Bereiche zwischen 4 und 5 Sekunden nochmals vergrößert dargestellt. Wie im unteren Diagramm zu erkennen, umfasst das Drucksignal zeitliche Schwankungen, welche aus einer im Wesentlichen periodischen Abfolge steigender und fallender Abschnitte bestehen. Diese steigenden bzw. fallendenden Abschnitte können in diesem Zusammenhang auch als steigende bzw. fallende Flanken Fₛ bzw. F_{f} bezeichnet werden. Hierbei kann eine steigende Flanke Fₛ insbesondere einen kontinuierlich steigenden Abschnitt des Drucksignals zwischen einem lokalen Minimum und einem lokalen Maximum bezeichnen, während eine fallende Flanke F_{f} insbesondere einen kontinuierlich fallenden Abschnitt des Drucksignals zwischen einem lokalen Maximum und einem lokalen Minimum bezeichnen kann. Derartige Modulationen des Drucksignals werden dabei durch die - im Wesentlichen - periodischen Pumpenbewegungen verursacht und können damit zur Drehzahlbestimmung herangezogen werden. Beispielsweise kann aus der Anzahl derartiger Flanken Fₛ bzw. F_{f} pro Zeit und/oder direkt aus deren zeitlichen Dauer auf die Pumpendrehzahl geschlossen werden. Um dabei Störeinflüsse, z. B. durch Druckeinbrüche bzw. Prelleffekte im Zusammenhang mit Dosiervorgängen, zu vermeiden, sollte die entsprechende Analyse des Drucksignals vorzugsweise nur in solchen Betriebsphasen vorgenommen werden, in der keine Dosierung erfolgt. Weiterhin sei in diesem Zusammenhang erwähnt, dass, wie erfinderseitig festgestellt wurde, die auftretenden Drucksignalmodulationen im Wesentlichen von der Grundschwingung der Pumpe 1 dominiert werden. Jedoch ist das Verfahren auch für den Fall höherer Harmonischer (Oberschwingungen) anwendbar, wobei dann entsprechende Korrekturfaktoren bei der Drehzahlbestimmung berücksichtigt werden müssen.

Figur 3 zeigt ein Flussdiagramm eines Verfahrens zur Drehzahlbestimmung einer Pumpe 1 gemäß einer Ausführungsform der Erfindung. Bei der Pumpe 1 kann es sich beispielsweise im eine Rotationskolbenpumpen, Membranpumpen und/oder Impellerpumpe handeln, wobei das erfindungsgemäße Verfahren nicht auf diese speziellen Pumpentypen beschränkt ist. Vorzugsweise wird mittels der Pumpe 1 ein Fluiddruck eines Fluids 2 (z. B. ein Reduktionsmittel zur Abgasnachbehandlung) auf einen Soll-Fluiddruck pₛₒₗₗ geregelt. Im Schritt S1 erfolgt ein Bereitstellen eines Drucksignals in einem vorbestimmten, d. h. zuvor festgelegten, Zeitintervall, wobei das Drucksignal einen Fluiddruck des Fluids 2 angibt und/oder eine Größe ist, aus der der Fluiddruck des Fluids 2 ableitbar ist. Beispielweise kann es sich bei dem bereitgestellten Drucksignal in einem vorbestimmten Zeitintervall um den in unteren Diagramm von Figur 2 gezeigten Verlauf handeln.

Im Schritt S2 erfolgt dann ein Bestimmen der Drehzahl aus zeitlichen Schwankungen des Drucksignals im vorbestimmten Zeitintervall. Vorzugsweise sind die zeitlichen Schwankungen dabei durch die Pumpenbewegung und/oder den Pumpenbetrieb verursachte Schwankungen des Drucksignals (z. B. Drucksignaloszillationen). Beispielsweise kann das Bestimmen der Drehzahl ein Ermitteln einer Anzahl an steigenden Flanken Fₛ und/oder einer Anzahl an fallenden Flanken F_{f} des Drucksignals im vorbestimmten Zeitintervall umfassen. Aus der Anzahl ΔN der steigenden bzw. fallenden Flanken Fₛ bzw. F_{f} innerhalb des vorbestimmten Zeitintervalls Δt kann so durch einfache Quotientenbildung (ΔN/Δt) und ggf. Umrechnung der Einheitenangabe auf vorteilhafte Weise die Drehzahl der Pumpe 1 bestimmt werden. Zudem oder alternativ kann das Bestimmen der Drehzahl auch ein Ermitteln zumindest einer Zeitdauer einer steigenden Flanken Fₛ und/oder zumindest einer Zeitdauer einer fallenden Flanke F_{f} des Drucksignals im vorbestimmten Zeitintervall umfassen. Da die so ermittelte Zeitdauer ΔT - im einfachsten Fall - gerade der halben Periodendauer der, vorzugsweise periodischen, Pumpenbewegung widergeben kann, kann durch entsprechende Kehrwertbildung (2ΔT)⁻¹ und ggf. Umrechnung der Einheitenangabe die Drehzahl der Pumpe 1 bestimmt werden. Da die Drehzahlbestimmung aus dem bereitgestellten Signal somit insgesamt unmittelbar im Zeitbereich erfolgen kann, kann auf eine rechenintensive Signalanalyse im Frequenzbereich verzichtet werden. Auf vorteilhafte Weise wird dadurch eine rechen- und signaltechnisch einfach zu realisierende Möglichkeit zur Drehzahlbestimmung bereitgestellt.

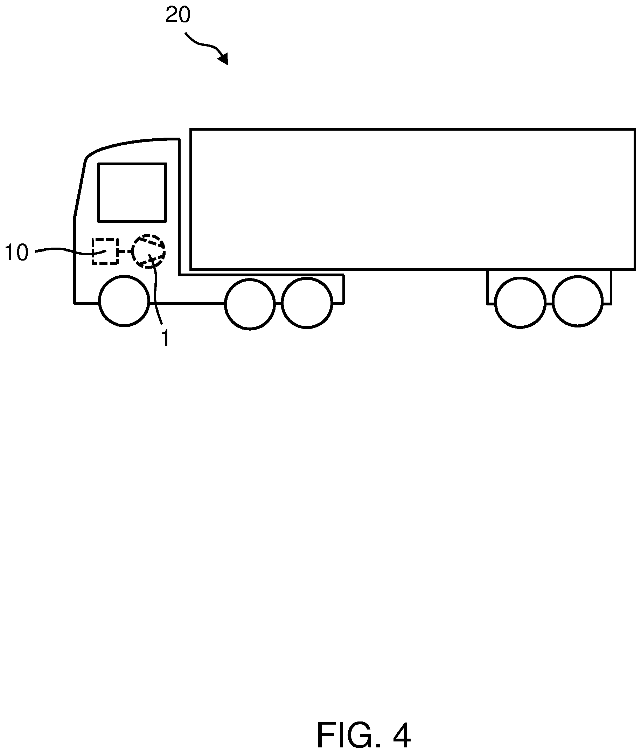

Figur 4 zeigt eine schematische Darstellung eines Kraftfahrzeugs 20 mit einer Vorrichtung 10 zur Drehzahlbestimmung einer Pumpe 1 gemäß Ausführungsform der Erfindung. Bei dem Kraftfahrzeug 20 handelt es sich vorliegend um ein Sattelkraftfahrzeug, d. h. ein Gespann aus einer Sattelzugmaschine und einem Sattelanhänger. Das Kraftfahrzeug 20 umfasst dabei unter anderem eine Pumpe 1, wobei mittels der Pumpe 1 vorzugsweise ein Fluiddruck eines Fluids 2, vorzugsweise ein Fluiddruck eines Reduktionsmittels zur Abgasnachbehandlung, auf einen Soll-Fluiddruck pₛₒₗₗ geregelt wird. Alternativ kann es sich bei der Pumpe 1 allerdings z. B. auch um eine Kraftstoff, Kühlmittel- und/oder Ölpumpe handeln. Daneben umfasst das Kraftfahrzeug 20 eine Vorrichtung 10 zur Drehzahlbestimmung der Pumpe 1. Die Vorrichtung 10 ist dabei ausgelegt, ein Verfahren, wie in diesem Dokument beschrieben, durchzuführen, wobei grundsätzlich die Pumpendrehzahl aus zeitlichen Schwankungen des pumpenausgangsseitigen Drucksignals bestimmt wird. Hierzu kann die Vorrichtung 10 ferner auch eine Sensoreinrichtung 4 umfassen, die ausgebildet ist, das entsprechende Drucksignal zu erfassen und bereitzustellen. Beispielsweise kann die Vorrichtung 10 hierzu einen Drucksensor 4 umfassen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Pumpe
- 2: Fluid
- 3: Dosiereinrichtung
- 4: Sensoreinrichtung
- 5: Abgastrakt
- 6: Tank
- 7: Drossel
- 10: Vorrichtung zur Drehzahlbestimmung
- 11: Steuereinrichtung
- 20: Kraftfahrzeug

## Patentansprüche

1. Verfahren zur Drehzahlbestimmung einer Pumpe (1), wobei mittels der Pumpe (1) ein Fluiddruck eines Fluids (2) auf einen Soll-Fluiddruck pₛₒₗₗ geregelt wird und wobei das Fluid ein Reduktionsmittels zur Abgasnachbehandlung ist, umfassend die Schritte:
- Bereitstellen eines Drucksignals in einem vorbestimmten Zeitintervall, wobei das Drucksignal einen Fluiddruck des Fluids (2) angibt oder eine Größe ist, aus der der Fluiddruck des Fluids (2) ableitbar ist; und
- Bestimmen der Drehzahl aus zeitlichen Schwankungen des Drucksignals im vorbestimmten Zeitintervall, wobei das Bestimmen der Drehzahl nicht auf Basis einer Fourier-Transformation des Drucksignals erfolgt;
**dadurch gekennzeichnet, dass** das Bestimmen der Drehzahl
a) ein Ermitteln einer Anzahl an steigenden und/oder fallenden Flanken des Drucksignals im vorbestimmten Zeitintervall umfasst; und/oder
b) ein Ermitteln zumindest einer Zeitdauer einer steigenden und/oder fallenden Flanke des Drucksignals im vorbestimmten Zeitintervall umfasst.

2. Verfahren falls rückbezogen auf Anspruch 1b, **dadurch gekennzeichnet, dass** die Zeitdauern mehrerer steigender Flanken und/oder mehrerer fallender Flanken des Drucksignals ermittelt werden und das Bestimmen der Drehzahl auf Basis einer mittleren Zeitdauer der steigenden und/oder fallenden Flanken erfolgt.

3. Verfahren nach einem der vorherigen Ansprüche, **dadurch gekennzeichnet, dass** die fallenden Flanken des Drucksignals jeweils kontinuierlich fallende Abschnitte des Drucksignals zwischen einem lokalen Maximum und einem lokalen Minimum sind und/oder die steigenden Flanken des Drucksignals jeweils kontinuierlich steigende Abschnitte des Drucksignals zwischen einem lokalen Minimum und einem lokalen Maximum sind.

4. Verfahren nach einem der vorherigen Ansprüche, **dadurch gekennzeichnet, dass** das bereitgestellte Drucksignal ein Drucksignal während einer Betriebsphase der Pumpe (1) ist, in der eine Pumpengeschwindigkeit zwischen 10-30%, vorzugsweise zwischen 15-25%, besonders bevorzugt zwischen 18-22%, der maximalen Pumpengeschwindigkeit vorliegt.

5. Verfahren nach einem der vorherigen Ansprüche, **dadurch gekennzeichnet, dass** das bereitgestellte Drucksignal ein Drucksignal während einer Betriebsphase der Pumpe (1) ist, in der der Fluiddruck nicht mehr als 5%, vorzugsweise nicht mehr 2%, besonders bevorzugt nicht mehr als 1%, vom Soll-Fluiddruck pₛₒₗₗ abweicht.

6. Verfahren nach einem der vorherigen Ansprüche, **dadurch gekennzeichnet, dass** das auf einen Soll-Fluiddruck pₛₒₗₗ geregelte Fluid (2) mittels einer Dosiereinrichtung (3) dosierbar ist und das bereitgestellte Drucksignal ein Drucksignal während einer Betriebsphase der Dosiereinrichtung (3) ist, in der keine Dosierung erfolgt.

7. Verfahren nach einem der vorherigen Ansprüche, **dadurch gekennzeichnet, dass** das bereitgestellte Drucksignal ein Drucksignal während einer Leerlaufphase der Pumpe (1) ist.

8. Verfahren nach einem der vorherigen Ansprüche, **gekennzeichnet durch** einen getakteten Betrieb, in dem das Verfahren in regelmäßigen Zeitabständen ausgeführt wird, wobei die regelmäßigen Zeitabstände vorzugsweise dem vorbestimmte Zeitintervall entsprechen.

9. Verfahren nach Anspruch 8, **dadurch gekennzeichnet, dass** das vorbestimmte Zeitintervall und/oder die regelmäßigen Zeitabstände 3 Sekunden, vorzugsweise 1 Sekunde, besonders bevorzugt 0,5 Sekunden ist.

10. Vorrichtung (10) zur Drehzahlbestimmung einer Pumpe (1), aufweisend:
eine Sensoreinrichtung (4), die ausgebildet ist, ein Drucksignal zu erfassen und bereitzustellen;
einen Prozessor, und
einen Speicher, der Anweisungen enthält, die durch den Prozessor ausführbar sind, wodurch die Vorrichtung ausgelegt ist, ein Verfahren nach einem der vorherigen Ansprüchen durchzuführen.

11. Kraftfahrzeug (20), umfassend
a) eine Pumpe (1), mittels der ein Fluiddruck eines Fluids (2), vorzugsweise ein Fluiddruck eines Reduktionsmittels zur Abgasnachbehandlung, auf einen Soll-Fluiddruck pₛₒₗₗ geregelt wird, und
b) eine Vorrichtung (10) zur Drehzahlbestimmung der Pumpe (1) gemäß Anspruch 10.

## Claims

1. Method for determining the speed of a pump (1), wherein a fluid pressure of a fluid (2) is controlled to a set fluid pressure pₛₒₗₗ by means of the pump (1) and wherein the fluid is a reducing agent for exhaust gas aftertreatment, comprising the steps:
- providing a pressure signal in a predetermined time interval, the pressure signal indicating a fluid pressure of the fluid (2) or being a quantity from which the fluid pressure of the fluid (2) can be derived; and
- determining the rotational speed from time variations of the pressure signal in the predetermined time interval, wherein the determination of the rotational speed is not based on a Fourier transform of the pressure signal;
**characterised in that** the determination of the rotational speed comprises
a) determining a number of rising and/or falling edges of the pressure signal in the predetermined time interval; and/or
b) determining at least one time duration of a rising and/or falling edge of the pressure signal in the predetermined time interval.

2. Method if referred back to claim 1b, **characterised in that** the time durations of several rising edges and/or several falling edges of the pressure signal are determined and the determination of the rotational speed takes place on the basis of an average time duration of the rising and/or falling edges.

3. Method according to one of the previous claims, **characterised in that** the falling edges of the pressure signal are each continuously falling sections of the pressure signal between a local maximum and a local minimum and/or the rising edges of the pressure signal are each continuously rising sections of the pressure signal between a local minimum and a local maximum.

4. A method according to any one of the preceding claims, **characterised in that** the pressure signal provided is a pressure signal during an operating phase of the pump (1) in which a pump speed between 10-30%, preferably between 15-25%, more preferably between 18-22%, of the maximum pump speed is present.

5. Method according to one of the previous claims, **characterised in that** the pressure signal provided is a pressure signal during an operating phase of the pump (1) in which the fluid pressure does not deviate from the set fluid pressure pₛₒₗₗ by more than 5%, preferably not more than 2%, particularly preferably not more than 1%.

6. Method according to one of the previous claims, **characterised in that** the fluid (2) controlled to a set fluid pressure pₛₒₗₗ can be metered by means of a metering device (3) and the pressure signal provided is a pressure signal during an operating phase of the metering device (3) in which no metering takes place.

7. Method according to one of the previous claims, **characterised in that** the pressure signal provided is a pressure signal during an idling phase of the pump (1).

8. A method according to any one of the preceding claims, **characterised by** a clocked operation in which the method is executed at regular time intervals, the regular time intervals preferably corresponding to the predetermined time interval.

9. Method according to claim 8, **characterised in that** the predetermined time interval and/or the regular time intervals is 3 seconds, preferably 1 second, particularly preferably 0.5 seconds.

10. Device (10) for determining the speed of a pump (1), comprising:
a sensor device (4) which is configured to detect and provide a pressure signal;
a processor, and
a memory containing instructions executable by the processor, whereby the apparatus is adapted to perform a method according to any one of the preceding claims.

11. Motor vehicle (20) comprising
a) a pump (1) by means of which a fluid pressure of a fluid (2), preferably a fluid pressure of a reducing agent for exhaust gas aftertreatment, is controlled to a set fluid pressure pₛₒₗₗ , and
b) a device (10) for determining the speed of the pump (1) according to claim 10.

## Revendications

1. Procédé de détermination de la vitesse de rotation d'une pompe (1), une pression de fluide d'un fluide (2) étant régulée au moyen de la pompe (1) à une pression de fluide de consigne pₛₒₗₗ et le fluide étant un agent réducteur destiné au post-traitement des gaz d'échappement, comprenant les étapes suivantes :
- fourniture d'un signal de pression dans un intervalle de temps prédéterminé, le signal de pression indiquant une pression de fluide du fluide (2) ou étant une grandeur à partir de laquelle peut être dérivée la pression de fluide du fluide (2) ; et
- détermination de la vitesse de rotation à partir des fluctuations dans le temps du signal de pression dans l'intervalle de temps prédéterminé, la détermination de la vitesse de rotation n'étant pas effectuée sur la base d'une transformée de Fourier du signal de pression ;
**caractérisé en ce que** la détermination de la vitesse de rotation
a) comporte une identification d'un nombre de fronts montants et/ou descendants du signal de pression dans l'intervalle de temps prédéterminé ; et/ou
b) comporte une identification d'au moins une durée d'un front montant et/ou descendant du signal de pression dans l'intervalle de temps prédéterminé.

2. Procédé, dans le cas d'une référence à la revendication 1b, **caractérisé en ce que** les durées de plusieurs fronts montants et/ou descendants du signal de pression sont identifiées et la détermination de la vitesse de rotation est effectuée sur la base d'une durée moyenne des fronts montants et/ou descendants.

3. Procédé selon l'une des revendications précédentes, **caractérisé en ce que** les fronts descendants du signal de pression sont respectivement des portions continuellement descendantes du signal de pression entre un maximum local et un minimum local et/ou les fronts montants du signal de pression sont respectivement des portions continuellement montantes du signal de pression entre un minimum local et un maximum local.

4. Procédé selon l'une des revendications précédentes, **caractérisé en ce que** le signal de pression fourni est un signal de pression pendant une phase de fonctionnement de la pompe (1) dans laquelle une vitesse de pompe présente est comprise entre 10 et 30 %, de préférence entre 15 et 25 %, particulièrement de préférence entre 18 et 22 % de la vitesse de pompe maximale.

5. Procédé selon l'une des revendications précédentes, **caractérisé en ce que** le signal de pression fourni est un signal de pression pendant une phase de fonctionnement de la pompe (1) dans laquelle la pression de fluide ne s'écart pas de plus de 5 %, de préférence de pas de plus de 2 %, notamment de préférence de pas de plus de 1 % de la pression de fluide de consigne pₛₒₗₗ.

6. Procédé selon l'une des revendications précédentes, **caractérisé en ce qu'**un fluide (2) régulé à une pression de fluide de consigne pₛₒₗₗ peut être dosé au moyen d'un dispositif de dosage (3) et le signal de pression fourni est un signal de pression pendant une phase de fonctionnement de la pompe (1) dans laquelle aucun dosage n'est effectué.

7. Procédé selon l'une des revendications précédentes, **caractérisé en ce que** le signal de pression fourni est un signal de pression pendant une phase de fonctionnement à vide de la pompe (1).

8. Procédé selon l'une des revendications précédentes, **caractérisé par** un fonctionnement cyclique dans lequel procédé est mis en œuvre dans les laps de temps réguliers, les laps de temps réguliers correspondant de préférence à l'intervalle de temps prédéterminé.

9. Procédé selon la revendication 8, **caractérisé en ce que** l'intervalle de temps prédéterminé et/ou les laps de temps réguliers sont de 3 secondes, de préférence de 1 seconde, particulièrement de préférence de 0,5 seconde.

10. Arrangement (10) de détermination de la vitesse de rotation d'une pompe (1), possédant :
un dispositif de détection (4) qui est configuré pour acquérir et fournir un signal de pression ;
un processeur, et
une mémoire, laquelle contient des instructions qui sont exécutables par le processeur, moyennant quoi l'arrangement est conçu pour mettre en œuvre un procédé selon l'une des revendications précédentes.

11. Véhicule automobile (20), comprenant
a) une pompe (1) au moyen de laquelle une pression de fluide d'un fluide (2), de préférence une pression de fluide d'un agent réducteur destiné au post-traitement des gaz d'échappement, est régulée à une pression de fluide de consigne pₛₒₗₗ, et
b) un arrangement (10) de détermination de la vitesse de rotation de la pompe (1) selon la revendication 10.
